# EUROPEAN PATENT SPECIFICATION

(11) **EP 0 290 006 B1**
(45) Date of publication and mention of the grant of the patent: **26.01.1994**
(21) Application number: 88107154.2
(22) Date of filing: 04.05.1988
(51) Int. Cl.: G01N 35/00, G01N 1/00, B01L 11/00

(54) **Waste container insert for washing automated immunoassay apparatus probe**
Überlaufgefässeinbau zum Waschen der Sonde einer automatisierten Immunoassaygeräts
Conteneur de trop plein inséré pour laver une sonde d'un appareil automatique pour immunoassay

(30) Priority: 08.05.1987 US 47832
(43) Date of publication of application: 09.11.1988
(73) Proprietor: ABBOTT LABORATORIES, Abbott Park, Illinois 60064-3500 (US)
(72) Inventor: Kanewske, William Joseph III, Dallas Texas 75208 (US)
(74) Representative: Modiano, Guido, Dr.-Ing.

(56) References cited:
- GB-A- 2 049 179
- US-A- 4 111 051
- US-A- 4 730 631

## Description

### Technical Field

The present invention relates to a waste container orifice insert used to facilitate washing of the outer surface of a dispensing means, such as a probe between individual sample tests conducted on an automated diagnostic assay apparatus. More particularly, the present invention relates to a plug member adapted to receive and redirect pressurized fluid discharged by the probe to the outer surface of the probe, thereby removing sample carryover. The plug also provides for drainage of the redirected solution into a waste container.

### Background of the Invention

A variety of automated liquid assay apparatuses for conducting assays of various liquids, especially biological fluids, for substances contained therein are known. Two such apparatuses are the TDx® Analyzer and ADx™ Analyzer available from Abbott Laboratories, Abbott Park, Illinois. The TDx® and ADx™ analyzers are automated diagnostic assay instruments generally used to measure analyte concentrations in biological fluids such as serum, plasma, and whole blood. The ADx™ is specifically designed to conduct automated assays for drug of abuse analytes such as amphetamine/methamphetamine, cocaine, THC, morphine, heroin or the like. The TDx® analyzer has been previously described in other patents, commonly assigned herewith, such as U.S. Patent No. 4,510,251 to Kirkemo et al.

The TDx® and ADx™ analyzers, for example, provide capabilities for both fluorescence polarization and nephelometric analysis, as well as for other systems of analysis. Whatever assay system is employed in a TDx or ADx Analyzer, as in other instruments of the prior art, the assays are carried out by well-known techniques which involved dispensing reagents from bulk containers located remotely from the test samples undergoing analysis, mixing the reagents with the samples in reaction cuvettes while the latter are indexed, by means of a carrier, comprising a rotating carousel, or the like, from one analysis station to another. Subsequent to delivery of all reaction components to a cuvette, buffer solution is normally passed through the probe to eliminate any residual reaction components prior to subsequent tests.

Known from US-A-4,111,051 is an article for washing an automated immunoassay probe as defined in the precharacterizing part of claim 1.

Also known from GB-A-2,049,179 is an automatic sample supply apparatus having a delivery tube which aspirates liquid samples from sample containers mounted on a turntable and delivers the samples in turn to the dosing aperture of an analytical instrument. The turntable also carries a flushing liquid discharge container which is of similar form to the sample container but has an aperture in the side wall. When the turntable is indexed to enable the delivery tube to enter the discharge container, a solenoid valve is opened to allow a flushing liquid pressurized in a vessel to flow through the tube and into the discharge container. The aperture in the wall of the discharge container is dimensioned so that the flushing liquid will only flow through it when a given head of liquid exists above the top of the aperture.

Typically, the wash solution is passed through the probe and dispensed to a remotely positioned waste container.

While this internal cleansing of the probe is generally satisfactory, it does not provide for washing of the outer surface of the probe which can retain residual sample in certain assays.

Sample material retained on the probe surface is especially troublesome in automated analyzers where failure to adequately wash the outer surface of the dispensing probe can cause undesired sample carryover to subsequent tests. When the analyte or substance to be detected is a drug of abuse such as cocaine, THC, amphetamine/methamphetamine, morphine, heroin, or the like, preventing sample carryover is crucial to maintenance of sample integrity.

Accordingly, there is a need for an article which provides for effective washing of the reaction component dispensing means of an automated liquid assay apparatus to eliminate the sample carryover and improve the performance of assays using readily available analytical instrumentation.

### Summary of the invention

The above-mentioned problems encountered in the use of the prior art articles for washing automated immunoassay probes are overcome by the article defined in the appended claims.

The present invention comprises an article for use in a clinical analysis apparatus of the type before described, which is useful to facilitate removal of the sample carryover from dispensing means such as a probe. Specifically, the invention relates to a plug member having a continuous outer wall and an inner wall. The inner wall of the plug defines an outer barrier of a first chamber having a first bottom surface. The inner wall also defines an inner barrier of a second chamber having a second bottom surface, an outer barrier defined by the outer wall, and at least one drainage port through the bottom surface. The outer wall projects outwardly away from the second bottom surface to a first top edge. The inner wall projects outwardly away from the first bottom surface and terminates at a second top edge. The first bottom surface is recessed from the second top edge to provide a pool for liquids discharged from fluid dispensing means positioned adjacent to and above the first chamber. Pressurized fluid discharged into the first chamber is redirected outwardly along the inner wall and away from the second top edge, thereby providing fluid circulation about the outer surface of the adjacently positioned dispensing means.

In the preferred embodiment, the plug member is substantially circular with coaxially aligned continuous inner and outer walls. Further, means for securing the plug in a orifice of a waste container is provided. The preferred securement means include a plurality of legs extending downwardly away from the second bottom surface. The legs include free ends having flanged portions projecting outwardly with respect to the outer wall. The preferred plug member is also provided along the first top edge with an outwardly projecting flange which forms an outer lip designed to cooperate with the upper rim of a waste container.

The preferred embodiment of the present invention is adapted to securely cooperate with the opening of a waste container and provides a number of previously unseen advantages when positioned therein. Specifically, the plug facilitates effective washing of an automated clinical analysis apparatus of a probe in a simple and inexpensive manner. Use of a plug member of the type described by the present invention in an automated clinical analysis apparatus minimizes sample carryover without modifications to the hardware or construction of the analyzer.

Further objects and advantages attained by the invention will be best understood by studying the following detailed description of a preferred embodiment together with the drawings.

### Brief Description of the Drawings

FIGURE 1 is perspective view of a clinical analysis apparatus showing a waste container incorporating the present invention mounted in a representative position in the analyzer.
FIGURE 2 is a top view of the plug member of the present invention.
FIGURE 3 is a bottom view of the plug member of the present invention.
FIGURE 4 is a perspective view of the plug member of the present invention.
FIGURE 5 is a cross sectional view of the plug member of the present invention.
FIGURE 6 is a top view showing the plug member of the present invention positioned within a waste container.
FIGURE 7 is a perspective view showing the plug member of the present invention positioned within a waste container.
FIGURE 8 is a representation of probe surface washing as accomplished with a waste container incorporating the plug member of the present invention.
FIGURE 9 shows an alternate embodiment of the present invention.

### Detailed Description of the Invention

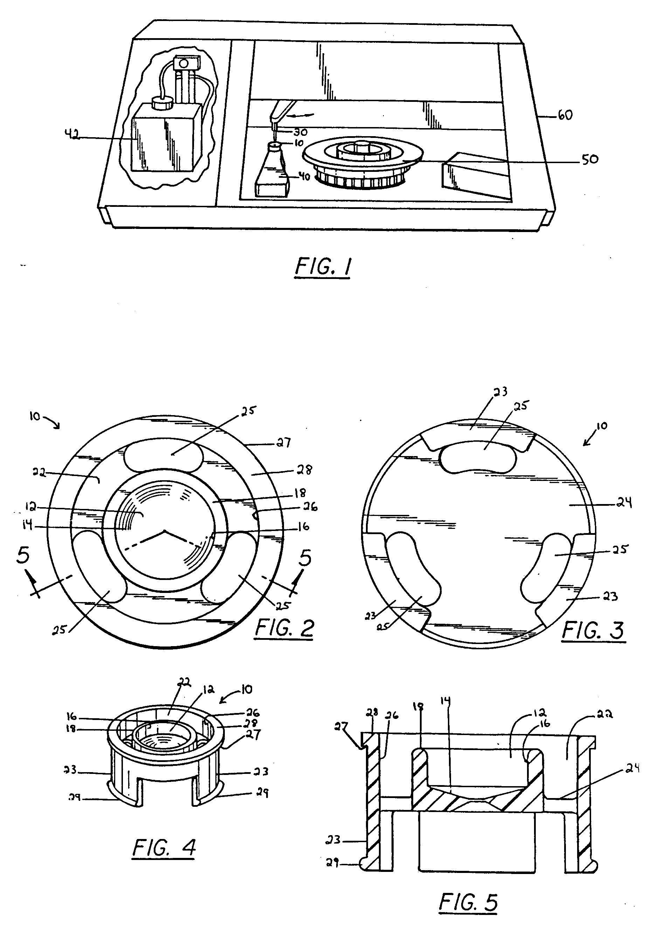

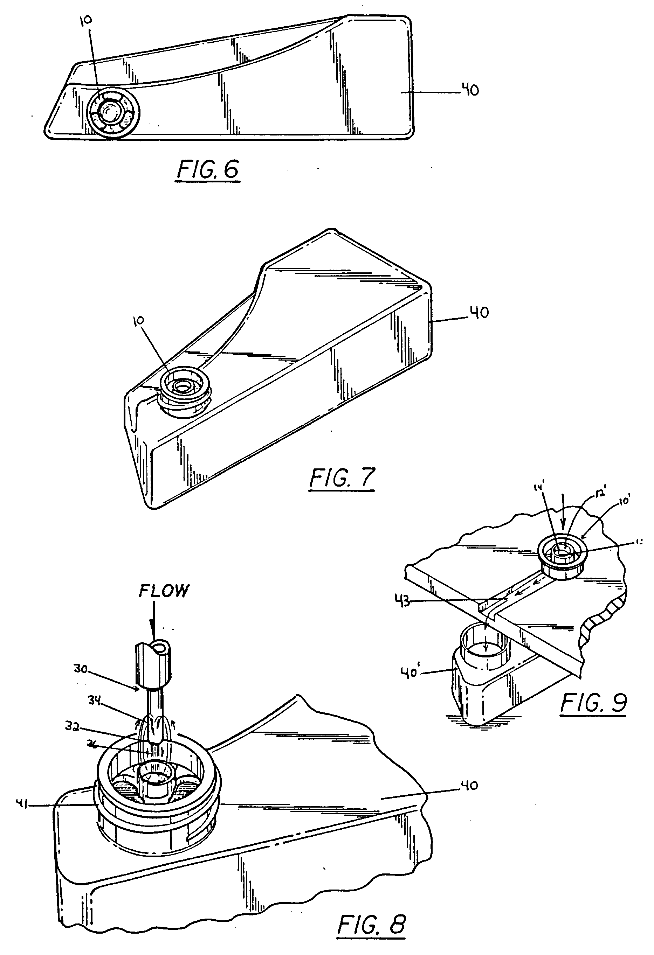

Referring now to the drawings, there is shown in FIGURES 2 - 5 a preferred embodiment of the present invention generally referred to by the reference numeral 10. As illustrated in FIGURES 6 and 7, the preferred embodiment of the present invention cooperatively engages a waste container positioned in a clinical analysis apparatus at a position removed from sample processing (see FIGURE 1).

In the preferred embodiment, the plug member 10 has a two chamber configuration defined by a continuous outer wall 26 and an inner wall 16.

In the preferred embodiment, the plug 10 is substantially circular with the outer wall 26 and inner wall 16 coaxially aligned and is adapted to cooperatively engage a container orifice. The inner wall 16 defines an outer barrier of a first chamber 12 having a first bottom surface 14. The inner wall 16 also defines an inner barrier of a second chamber 22. The second chamber 22 includes a second bottom surface 24. The bottom surface 24 of the second chamber 22 has at least one drainage port therethrough. As seen best in FIGURES 2 and 3, in the preferred embodiment the bottom surface 24 includes three generally equally spaced drainage ports 25.

The outer wall 26 of the second chamber 22 projects outwardly away from the second bottom surface 24 to a first top edge 28. As seen best in FIGURE 4, the first top edge 28 extends outwardly beyond the outer wall 26 forming an outer lip 27. When plug 10 cooperatively engages the orifice of container 40, the plug 10 is appropriately positioned in bottle 40 with (as seen in FIGURES 6 and 7) the lip 27 fitting in sealing position with rim 41 of bottle 40.

The inner wall 16 projects outwardly away from the first bottom surface 14 to a second top edge 18. In the preferred embodiment shown, the second top edge 18 is recessed with respect to first top edge 28 to assure that liquid overflow from the first chamber 12 is directed into the second chamber 22 and subsequently into waste container 40 rather than spilling over outer wall 26 into the internal environment of the clinical analysis apparatus 60.

An important feature of the plug 10 is that the first bottom surface 14 is recessed from the second top edge 28 to provide a pool for liquid 36 discharged from fluid dispensing means such as probe 30 positioned thereabove as seen in FIGURE 8. When pressurized liquid 36 is discharged from probe 30 into first chamber 12 the bottom surface 14 and inner wall 16 redirect liquid 36 outwardly to and along the inner wall 16 away from the top edge 18, thereby providing fluid circulation about the outer surface 34 of the adjacently positioned probe 30 in the manner represented in FIGURE 8. The "shower effect" or washing produced when discharged liquid 36 is redirected upwardly along the inner wall 16 to the probe surface 34 is effective to substantially remove sample remaining on the outer surface 34 of the probe 30. By way of example, the "shower effect" washing of the probe surface 34 is accomplished best when the probe tip 32 is central positioned within inner chamber 12, approximately 0.254 cm (1/10") below second upper edge 18. This position will result in circulation of fluid over about 0.846 cm (1/3") of the surface of the lower portion of probe, 34. It will be appreciated that the discharged fluid can be delivered to inner chamber 12 as either a steady stream or as intervaled pulses of short duration.

In the preferred embodiment, the plug 10 is secured to a waste bottle 40 by previously discussed lip 27 and a plurality of legs 23 extending downwardly away from the second bottom surface 24. Each leg 23 is provided at its free end with a flange 29 projecting outwardly with respect to outer wall 26. As seen in FIGURE 3, the preferred embodiment includes three legs 23 positioned generally equal distance along the second bottom surface 24. Referring to FIGURES 6 and 7, positioning of the preferred embodiment of the plug 10 in a waste container 40 is shown. In the preferred embodiment, the plug 10 and waste container 40 comprise a disposable combination.

The preferred embodiment of the present invention is described herein as a plug insert 10 positioned in the orifice of a waste container 40. However, as shown in FIGURE 9, one alternative embodiment, (in which similar parts are represented with prime designations) plug 10' can be positioned external to and in fluid communication with the orifice of a waste container 40'. Fluid communication between the waste container 40' and plug 10' is provided by channel 43. The present invention can also be provided with a drainage aperture through the bottom surface 14 of the inner chamber 12. As seen in FIGURE 9, this drainage aperture 15 is preferably located at the center of bottom surface 14 and facilitates drainage of wash solution dispensed to inner chamber 12' by a probe in the manner previously described.

It is to be understood that the plug 10 can be made by a number of processes including lathing and molding and can be made from a number of suitable materials easily ascertained by one of skill in the art. In the preferred embodiment the plug 10 is made of a plastic. While various plastics can be used such as polyethylene, polypropylene or the like, prefereably the plug 10 is polypropylene (90%) and teflon (10%).

Surface 34 cleaning of probe 30 of a clinical analysis apparatus is best seen by the following example using an Abbott ADx™ Analyzer.

1. An aliquot of unknown sample and pretreatment solution are pipetted into a predilute well positioned on carousel 50. A sufficient volume of diluent buffer from a buffer reservoir 42 is added to the predilute well. Following incubation of the mixture in the predilute well, a sample from the predilute well is pipetted into a reaction cuvette positioned on the carousel 50. A background intensity reading is taken and specified amounts of tracer and antibody and samples from the predilute well are then added to the cuvette, together with sufficient diluent buffer to raise the final volume to that required in the specific assay. Subsequent to delivery of all reagent components to the cuvette, the probe 30 is removed from the site of the sample and reaction cuvette containing carousel 50 and positioned over the waste container bottle 40. When positioned adjacent the waste container bottle 40, diluent buffer 36 is delivered through the probe 30 and the outer surface 34 of the probe is washed in the manner shown in FIGURE 8. Specifically, the probe tip 32 is positioned centrally within inner chamber 12 approximately 0.254 cm (1/10") below second edge 18. Diluent buffer is delivered through the probe tip 32 at a flow rate between 700 to 900 microliters per second. Delivering diluent buffer through the probe 30 under these conditions produces the "shower effect" washing along about 0.846 cm (1/3") ± 0.0254 cm (1/100") of the probe surface 34 in a manner which effectively removes any sample retained on the surface 34.

It will be appreciated that the discharge pressure needed to produce the "shower effect" type cleaning action of the probe surface 34 will vary depending on distance between the plug 10 and probe tip 32 as well as the specific dimensions of the inner chamber 12. It is to be understood that the present invention is directed to a plug 10 having a configuration which provides for cascading type recirculation of liquids about a probe surface and drainage of such recirculated fluid into a waste container. In this regard, the foregoing detailed description is to be considered as illustrative rather than limiting, since many variations within the scope of the invention which will fully achieve these and other advantages of the invention will be apparent to one of ordinary skill in the art. Accordingly, it is intended that the appended claims, including all equivalents thereof, be construed solely to define the scope of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An article for washing an automated immunoassay probe (30) which aspirates liquid samples through a central bore by dipping into the samples and which cleanses said bore by the expulsion of wash liquid (36) comprising a member (10) having continuous and coaxially aligned inner and outer walls (16, 26), said inner wall (16) defining an outer barrier of a first chamber (12) having a first bottom surface (14), said inner wall (16) also defining an inner barrier of a second chamber (22) having a second bottom surface (24) and an outer barrier defined by said outer wall (26), said second bottom surface (24) having at least one drainage port (25) therethrough, said outer wall (26) projecting upwardly away from said second bottom surface (24) to a first top edge (28), said inner wall (16) projecting upwardly away from said second bottom surface (24) to a second top edge (18) which is recessed with respect to said first top edge (28), said first chamber (12) further serving to redirect pressurized discharged fluid (36) outwardly along said inner wall (16) and away from said second top edge (18), thereby providing fluid circulation about an outer surface (34) of adjacently positioned probe (30),
characterized in that said article comprises a waste container orifice insert (10) wherein said first top edge (28) extends outwardly away from said outer wall (26) forming an outer lip (27) and said first bottom surface (14) is recessed from said second top edge (18) to provide a pool for liquid (36) discharged from said probe (30) positioned thereabove,
and in that said insert (10) comprises a plug member (10) constructed of an alloy of about 90% polypropylene and 10% teflon, and said insert further comprises means (23, 29) for securing said plug member (10) in said container (40) orifice.

2. An article according to claim 1, characterized in that said plug member (10) is substantially circular.

3. An article according to claim 1, characterized in that said securement means (23) comprises a plurality of legs (23) extending downwardly away from said second bottom surface (24), said legs (23) terminating at flanged free ends (29), said flanges (29) projecting outwardly with respect to said outer wall (26).

4. An article according to claim 1, characterized in that the dimensions of said first and second chambers (16, 26) and the drainage ports (25) in said bottom surface (24) are such that wash liquid (36) delivered to said first chamber (12) at a rate of between about 700 and 900 microliters per second overflows the first chamber (12) but not the second chamber (22) and rises to a height of approximately 0.846cm above said second top edge (18).

## Patentansprüche

1. Eine Vorrichtung zum Reinigen eines automatischen Immunoassay-Probennehmers (30), welcher flüssige Proben durch eine zentrale Bohrung ansaugt, indem er in die Proben eintaucht und welcher die Bohrung durch den Ausstoß von Reinigungsflüssigkeit (34) reinigt, wobei die Vorrichtung ein Bauteil (10) mit durchgehenden und koaxial ausgerichteten inneren und äußeren Wandungen (16, 26) beinhaltet, wobei die innere Wandung (16) eine äußere Begrenzung einer ersten Kammer (12) definiert mit einer ersten unteren Oberfläche (14), wobei die innere Wandung (16) auch eine innere Begrenzung einer zweiten Kammer (22) mit einer zweiten unteren Oberfläche (24) definiert, und einer äußeren Begrenzung, definiert durch die äußere Wandung (26), wobei die zweite untere Oberfläche (24) wenigstens eine Ablauföffnung (25) beinhaltet, wobei sich die äußere Wandung (26) nach oben von der zweiten unteren Oberfläche zu einem ersten oberen Rand (28) erstreckt, wobei die innere Wandung (16) sich aufwärts von der zweiten oberen Oberfläche (24) zu einem zweiten oberen Rand (18) hinweg erstreckt, welcher im Hinblick auf den ersten oberen Rand (28) zurückversetzt ist, wobei die erste Kammer (12) weiterhin dazu dient, die druckbeladene ausgestoßene Flüssigkeit (36) auswärts entlang der inneren Wandung (16) und weg von dem zweiten oberen Rand (18) zurückzuleiten, wodurch eine Flüssigkeitsumwälzung um eine äußere Oberfläche eines benachbart befindlichen Probennehmers (30) bewirkt wird,
dadurch gekennzeichnet, daß die Vorrichtung eine Abfallbehältereinlaßöffnung (10) beinhaltet, wobei der erste obere Rand (28) sich nach auswärts von der äußeren Wandung (26) erstreckt und einen äußeren Wulst (27) bildet, und wobei die erste untere Oberfläche (14) bezüglich des zweiten oberen Randes (18) zurückversetzt ist, um ein Behältnis für eine Flüssigkeit (36) zu schaffen, welche aus dem darüber befindlichen Probennehmer (30) ausgestoßen wurde,
und daß der Einsatz (10) ein Kolbenbauteil umfaßt, welches aus einer Legierung aus etwa 90% Polypropylen und etwa 10% Teflon gefertigt ist, und wobei der Einsatz weiterhin eine Vorrichtung (23,29) umfaßt, um das Kolbenbauteil (10) in der Öffnung des Behälters (40) zu sichern.

2. Eine Vorrichtung nach Anspruch 1, dadurch gekennzeichnet, daß das Kolbenbauteil (10) im wesentlichen kreisrund ist.

3. Eine Vorrichtung nach Anspruch 1, dadurch gekennzeichnet, daß die Sicherungsvorrichtung (23) eine Vielzahl von Beinen (23) enthält, die sich nach unten von der zweiten unteren Oberfläche (24) erstrecken, wobei die Beine (23) an den geflanschten freien Enden (29) aufhören, wobei die Flansche (29) sich bezüglich der äußeren Wandung (26) nach außen erstrecken.

4. Eine Vorrichtung nach Anspruch 1, dadurch gekennzeichnet, daß die Maße der ersten und zweiten Kammern (16,26) und die Ablauföffnungen (25) in der unteren Oberfläche (24) derart sind, daß die Reinigungsflüssigkeit (36), die in die erste Kammer (12) mit einer Fließgeschwindigkeit zwischen 700 und 900 Mikrolitern pro Sekunde abgegeben wird, aus der ersten Kammer (12) überläuft, jedoch nicht aus der zweiten Kammer (22) und bis zu einer Höhe von ungefähr 0,846 cm über den zweiten oberen Rand (18) steigt.

## Revendications

1. Article pour laver une sonde (30) d'immuno-essais automatique qui aspire des échantillons de liquide à travers un trou central en la plongeant dans les échantillons, et qui nettoie ledit trou par l'expulsion d'un liquide de lavage (36), comprenant un élément (10) qui présente des parois intérieure et extérieure continues et coaxialement alignées (16, 26), ladite paroi intérieure (16) définissant une barrière extérieure d'une première chambre (12) ayant une première surface de fond (14), ladite paroi intérieure (16) définissant également une barrière intérieure d'une seconde chambre (22) ayant une seconde surface de fond (24) et une barrière extérieure définie par ladite paroi extérieure (26), ladite seconde surface de fond (24) étant traversée par au moins un orifice de drainage (25), ladite paroi extérieure (26) se projetant vers le haut en éloignement de ladite seconde surface de fond (24) jusqu'à une première bordure supérieure (28), ladite paroi intérieure (16) se projetant vers le haut en éloignement de ladite seconde surface de fond (24) jusqu'à une seconde bordure supérieure (18) qui est en retrait par rapport à ladite première bordure supérieure (28), ladite première chambre (12) servant en outre à renvoyer le fluide déchargé sous pression (36) vers l'extérieur le long de ladite paroi intérieure (16) et en éloignement de ladite seconde bordure supérieure (18), assurant ainsi une circulation du fluide autour d'une surface extérieure (34) d'une sonde positionnée de façon adjacente (30), caractérisé en ce que cet article comprend un insert (10) pour un orifice d'un récipient à rebuts, ladite première bordure supérieure (28) s'étendant vers l'extérieur en éloignement de ladite paroi extérieure (26) en formant une lèvre extérieure (27), et ladite première surface de fond (14) étant située en retrait par rapport à ladite seconde bordure supérieure (18) afin de réaliser un bassin pour le liquide (36) déchargé depuis ladite sonde (30) placée au-dessus de celui-ci,
et en ce que ledit insert (10) comprend un bouchon (10) réalisé en un alliage d'environ 90% de polypropylène et 10% de téflon®, et ledit insert comprenant en outre des moyens (23, 29) pour attacher ledit bouchon (10) dans l'orifice dudit récipient (40).

2. Article selon la revendication 1, caractérisé en ce que ledit bouchon (10) est sensiblement circulaire.

3. Article selon la revendication 1, caractérisé en ce que lesdits moyens d'attache (23) comprennent une pluralité de pattes (23) s'étendant vers le bas en éloignement de ladite seconde surface de fond (24), lesdites pattes (23) se terminant par des extrémités libres à brides (29), lesdites brides (29) se projetant vers l'extérieur par rapport à ladite paroi extérieure (26).

4. Article selon la revendication 1, caractérisé en ce que les dimensions desdites première et seconde chambres (16, 26) et des orifices de drainage (25) dans ladite surface de fond (24) sont telles que le liquide de lavage (36) délivré vers ladite première chambre (12) à un débit entre environ 700 et 900 microlitres par seconde déborde de la première chambre (12) mais pas de la seconde chambre (22) et s'élève jusqu'à une hauteur d'approximativement 0,846 cm au-dessus de ladite seconde bordure supérieure (18).
